# EUROPEAN PATENT APPLICATION

(11) **EP 4 597 764 A1**
(43) Date of publication of application: **06.08.2025**
(21) Application number: 24155098.7
(22) Date of filing: 31.01.2024
(51) Int. Cl.: H01R 25/14, H02B 1/20, H02B 1/21, H02G 5/00, H02G 5/02

(54) **AN ARRANGEMENT FOR SUPPORTING AND FIXING BUSBARS**

(71) Applicant: ABB Schweiz AG, 5400 Baden (CH)
(72) Inventor: Dabrowski, Przemyslaw, Meszna (PL); Domurad, Zbigniew, Tobolice (PL); Setlik, Piotr, Krakow (PL); Flacht, Piotr, Krakow (PL); Sztuczka, Piotr, Bielsko - Biala (PL); Wojtowicz, Daniel, Krakow (PL); Kasprzycki, Miroslaw, Bielsko-Biala (PL); Sekula, Mateusz, Bielsko-Biala (PL); Adamus, Paulina, Bielsko-Biala (PL); Karosek, Wojciech, Rudzica (PL)
(74) Representative: Wroblewski, Marcin Jan

(57) **Abstract**

An arrangement (10, 20, 30) for supporting and fixing busbars, comprising at least one insulating unit (11, 21, 31) for connecting adjacent busbars (1, 2, 3). Said insulating unit (11, 21, 31) is arranged such that a change of its position along at least one busbar (1, 2, 3) causes a change of an angle between busbars (1, 2, 3).

## Description

### Technical field

The present invention relates to an arrangement for supporting and fixing busbars that is used with busbars guided in low voltage switchgears from circuit breaker terminals to main busbars.

### Background of the invention

From German patent DE10001184B4 there are known packing holders designed to keep distance between flat bar sections. The packing holders contain spacer elements and holding plates corresponding to the number of the flat bar sections. The packing holders constitute a part of device for connecting busbars to connection contacts of an electrical installation device. The object of the invention according to said German patent is to provide a device for connecting busbars of a busbar system that ensures more flexible adaptation to the corresponding requirements of said busbar connections while maintaining simple handling of the connection.

From European patent application EP0004266A1 there is known a bar support assembly for a set of power transmission bars comprising insulator elements assembled with the bars to grip the opposite lateral edges of the said bars. Each of the insulator elements consists of a block with two sets of grooves located on the opposite sides of the block. Said sets of grooves are situated perpendicular with respect to each other. The object of said invention is to provide a bar support assembly that allows for meeting the requirements associated with the various installations where bars are carried.

From European patent EP1544972B1 there is known a supporting device for busbars in a cabinet for an electrical switchboard that comprises a first module with a shaped body designed to be connected to a supporting element of the cabinet and a second module. The first module is made substantially of insulating material and has a first side, designed to be set resting on the supporting element, and a second side, along which there are defined first coupling seats. The second module is also made substantially of insulating material. Further, the second module has a third side, along which there are defined second coupling seats, and a fourth wall, along which there are defined third coupling seats. The second module is operatively coupleable to the first module with its third or fourth wall facing said second wall so that said first seats mate geometrically with said second or said third seats, so forming a seat for housing a busbar. The object of said invention is to provide a supporting device for busbars in a cabinet for an electrical switchboard, the structure of which may be obtained with an optimized number of parts that can be fitted to one another in a simplified way as compared to the devices of a known type.

PCT application WO0027008A1 discloses a device for supporting and fixing bus-bars in cabinets for switchboards. Said device comprises a first element constituted by a body made of insulating material, wherein the first element has a first side provided with means for direct engagement to a supporting frame and a second side provided with a plurality of first seats for coupling to corresponding bus-bars. Said device comprises further a second element constituted by a body made of insulating material, wherein the second element has a shaped side along which a plurality of second seats are provided for coupling to the bus-bars. The first and second elements can be mutually connected in order to geometrically couple the first and second seats and to clamp the bus-bars inside the seats. The aim of the invention according to said PCT application is to provide a device for supporting and fixing busbars in cabinets for switchboards having a reduced number of components.

European patent EP1451911B1 discloses a supporting insulator including a mainly bar-like frame with notches for mounting of a busbar. The notches are placed in a distance from one another and are at least partly of shape of the cross-section or a part of the cross-section of the busbar. The notches are located on the at least one side of the frame of the supporting insulator. The first object of the invention according to the European patent application EP1451911B1 is to provide a supporting insulator, which may be used for adjusting and insulating several same kind of and/or different kind of busbars. The second object of the invention according to said patent application is to provide a supporting insulator, in which distance between busbars can be chosen flexibly when using the insulator.

European patent EP2483980B1 discloses a vertical electrical busbar support system comprising a vertical busbar including a vertical conductive strips, a first support rail, a first vertical busbar support on the first support rail, the first vertical busbar support including an insulating body, a vertical groove, and a horizontal support member spanning the vertical groove, the vertical groove disposed to engage a first lateral edge of the vertical conducting strip and the horizontal support member disposed to engage a notch on the first lateral edge of the vertical conducting strip, a second support rail parallel to the first support rail, and a second vertical busbar support on the second support rail, the second vertical busbar support including an insulating body and a vertical groove disposed to engage a second lateral edge of the vertical conducting strip.

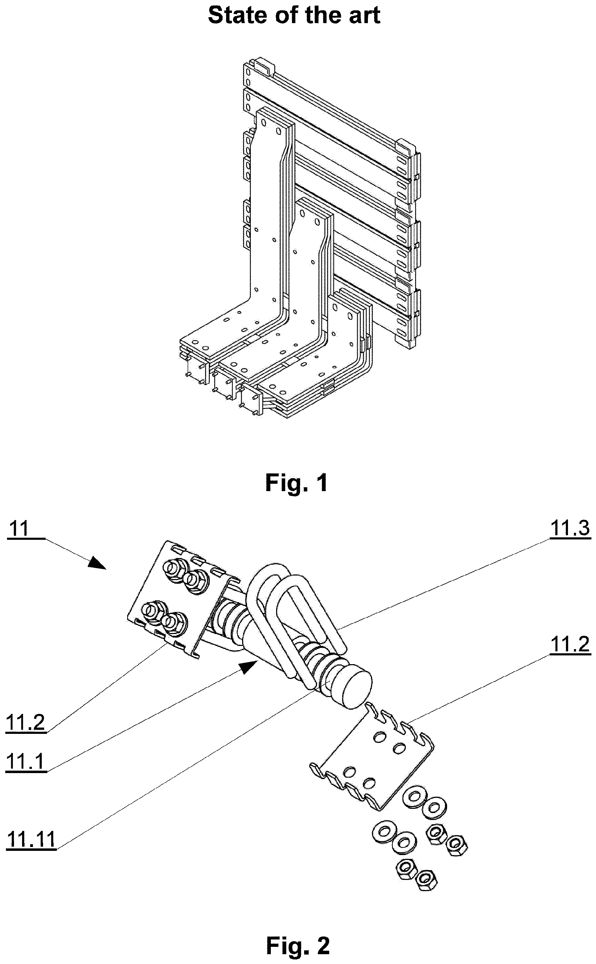

The arrangements for supporting and fixing busbars known from the prior art that are used with busbars guided in low voltage switchgears from circuit breaker terminals to main busbars constitute structures that allows the busbars to be oriented only in horizontal or vertical direction (see Fig. 1). Therefore, an object of the invention is to develop an arrangement for supporting and fixing busbars to be used with busbars oriented angularly, in particular busbars oriented angularly with respect to each other, which at the same time maintains an appropriate level of electrical insulation of said busbars.

### The essence of the invention

The object of the invention is an arrangement for supporting and fixing busbars, comprising at least one insulating unit for connecting adjacent busbars. The essence of the invention is that said insulating unit is arranged such that a change of its position along at least one busbar causes a change of an angle between busbars.

The application of said insulating unit arranged such that a change of its position along at least one busbar causes a change of an angle between busbars provides an arrangement for supporting and fixing busbars to be used with busbars oriented angularly, in particular busbars oriented angularly with respect to each other, which at the same time maintains an appropriate level of electrical insulation of said busbars. As the result it ensures an increase in the short-circuit withstand of a busbar system comprising said busbars and improvement in heat dissipation from busbars compared to the solutions known from the prior art. Thus it leads to improvement in thermal performance of switchgears where said busbars are guided.

Preferably, the at least one insulating unit comprises at least one insulating element to be arranged slidably between adjacent busbars.

The application of the at least one insulating unit comprising the at least one insulating element to be arranged slidably between adjacent busbars provides an arrangement for supporting and fixing busbars to be used with busbars oriented angularly, in particular busbars oriented angularly with respect to each other, which at the same time maintains an appropriate level of electrical insulation of said busbars. As a result it ensures an increase in the short-circuit withstand of a busbar system comprising said busbars and improvement in heat dissipation from busbars compared to the solutions known from the prior art. Thus it leads to improvement in thermal performance of switchgears where said busbars are guided.

Further, the application of the at least one insulating unit comprising the at least one insulating element to be arranged slidably between adjacent busbars ensures that the position of the insulating unit on busbars can be freely adjusted.

Preferably, the at least one insulating element is arranged to be in contact with an upper located part of the surface of one busbar and a lower located part of the surface of the other busbar.

Preferably, the at least one insulating element comprises grooves with a width corresponding to a width of layers forming each busbar.

The application of the at least one insulating element comprising grooves with the width corresponding to the width of layers forming each busbar facilitates positioning of each layer forming a busbar. Further said application ensures that the arrangement according to the invention is to be used with different number of layers forming a busbar, wherein each of such a layer can have different cross-section. Thus the arrangement for supporting and fixing busbars according to the invention constitutes a universal solution.

Preferably, the at least one insulating element is in a form of a round shaft.

Preferably, the at least one insulating unit comprises further at least two holding plates and at least two threated U-bolts for connecting the at least two holding plates with the at least one insulating element, and wherein the at least two holding plates and the at least one insulating element are to be located on the opposite surfaces of adjacent busbars.

Preferably, the at least one insulating unit comprises at least two clamps adapted to be slidably arranged on adjacent busbars, wherein said at least two clamps comprises fitted connections that allow a cooperation between said clamps such that moving one clamp relative to the other clamp changes an angle between adjacent busbars.

The application of the at least one insulating unit comprising the at least two clamps adapted to be slidably arranged on adjacent busbars, where said at least two clamps comprises fitted connections that allow a cooperation between said clamps such that moving one clamp relative to the other clamp changes an angle between adjacent busbars provides an arrangement for supporting and fixing busbars to be used with busbars oriented angularly, in particular busbars oriented angularly with respect to each other, which at the same time maintains an appropriate level of electrical insulation of said busbars. As a result it ensures an increase in the short-circuit withstand of a busbar system comprising said busbars and improvement in heat dissipation from busbars compared to the solutions known from the prior art. Thus it leads to improvement in thermal performance of switchgears where said busbars are guided.

Further, the application of the insulating unit as disclosed ensures that the position of the insulating unit on busbars can be freely adjusted.

Preferably, each of the at least two clamps comprises a body and a support arm, wherein the body and the support arm have the fitted connections and wherein the fitted connections allow a cooperation between the body of one of the at least two clamps and the support arm of the other of the at least two clamps.

The application of the fitted connections on the bodies and the support arms of the at least two clamps allows blocking of movement between the at least two clamps in a direction perpendicular to the longitudinal axes of the busbars.

Preferably, the fitted connections have a form of ribs.

The application of the fitted connections having a form of ribs facilitates heat dissipation from busbars.

Preferably, the at least one insulating unit comprises:
- at least two spherical elements, wherein the least two spherical elements are adapted to be slidably arranged on adjacent busbars;
- a holder for holding the at least two spherical elements;
wherein the holder comprises openings with internal spherical surfaces for said spherical elements, the internal spherical surfaces being adapted for allowing to secure said spherical elements within the holder and allowing said spherical elements to rotate in each axis.

The application of the at least one insulating unit comprising the at least two spherical elements, where the least two spherical elements are adapted to be slidably arranged on adjacent busbars; the holder for holding the at least two spherical elements; where the holder comprises openings with internal spherical surfaces for said spherical elements, the internal spherical surfaces being adapted for allowing to secure said spherical elements within the holder and allowing said spherical elements to rotate in each axis provides an arrangement for supporting and fixing busbars to be used with busbars oriented angularly, in particular busbars oriented angularly with respect to each other, which at the same time maintains an appropriate level of electrical insulation of said busbars. As a result it ensures an increase in the short-circuit withstand of a busbar system comprising said busbars and improvement in heat dissipation from busbars compared to the solutions known from the prior art. Thus it leads to improvement in thermal performance of switchgears where said busbars are guided.

Further, the application of the insulating unit as disclosed ensures that the position of the insulating unit on busbars can be freely adjusted.

Preferably, the at least two spherical elements comprise ribs.

The ribs of the at least two spherical elements facilitates heat dissipation from busbars.

Preferably, the at least two spherical elements are made of thermally conductive material.

Preferably, the holder has a form of two plates to be connected with each other.

### Advantages of the invention

The arrangement for supporting and fixing busbars according to the invention provides an increase in the short-circuit withstand of a busbar system compared to the solutions known from the prior art.

The arrangement for supporting and fixing busbars according to the invention constitutes a durable fixation of busbars.

The arrangement for supporting and fixing busbars according to the invention constitutes a simpler solution compared to the solutions known from the prior art as said arrangement is based on minimizing the number of components that make it up.

The arrangement for supporting and fixing busbars according to the invention provides an improvement in thermal performance of busbars and as a result in thermal performance of a switchgear where said busbars are to be used.

The arrangement for supporting and fixing busbars according to the invention provides acceleration of manufacturing and assembly processes of busbars, and consequently the costs associated with the indicated processes.

The arrangement for supporting and fixing busbars according to the invention constitutes a universal solution that is to be used with different number of layers forming a busbar, wherein each of such a layer can have different cross-section.

### Description of drawing figures

The subject of the invention is shown in the embodiments in a drawing, in which:
- Fig. 1: presents an arrangement for supporting and fixing busbars known from the prior art used in bent busbars;
- Fig. 2: presents an insulating unit of an arrangement for supporting and fixing busbars according to the first embodiment of the invention in a partially exploded view;
- Fig. 3: presents an insulating unit of an arrangement for supporting and fixing busbars according to the first embodiment of the invention in a side view;
- Fig. 4: presents busbars with an arrangement for supporting and fixing busbars according to the first embodiment of the invention connected to main busbars in a perspective view;
- Fig. 5: presents busbars with an arrangement for supporting and fixing busbars according to the first embodiment of the invention connected to main busbars in a partially exploded view;
- Fig. 6: presents an insulating unit of an arrangement for supporting and fixing busbars according to the second embodiment of the invention in a perspective view;
- Fig. 7: presents an insulating unit of an arrangement for supporting and fixing busbars according to the second embodiment of the invention in a front view;
- Fig. 8: presents busbars with an arrangement for supporting and fixing busbars according to the second embodiment of the invention connected to main busbars in a perspective view;
- Fig. 9: presents an insulating unit of an arrangement for supporting and fixing busbars according to the third embodiment of the invention in a perspective view;
- Fig. 10: presents a plate of a holder of an insulating unit of an arrangement for supporting and fixing busbars according to the third embodiment of the invention in a perspective view;
- Fig. 11: presents busbars with an arrangement for supporting and fixing busbars according to the third embodiment of the invention connected to main busbars in a perspective view;
- Fig. 12: presents busbars with an arrangement for supporting and fixing busbars according to the third embodiment of the invention connected to main busbars in a side view;

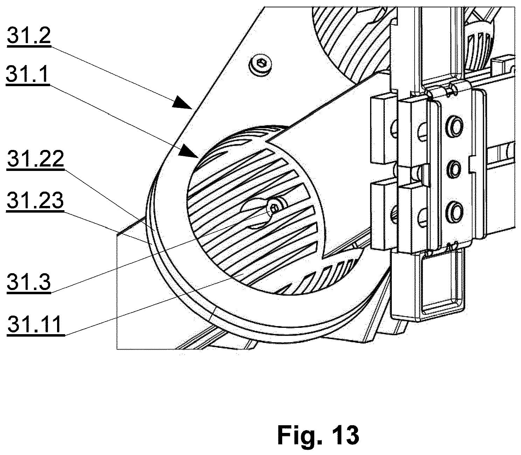

- Fig. 13: presents busbars with an arrangement for supporting and fixing busbars according to the third embodiment of the invention connected to main busbars in a zoomed-in perspective view with a visible connection between a spherical element and a busbar.

### Detailed description of the invention

### The first embodiment of the invention

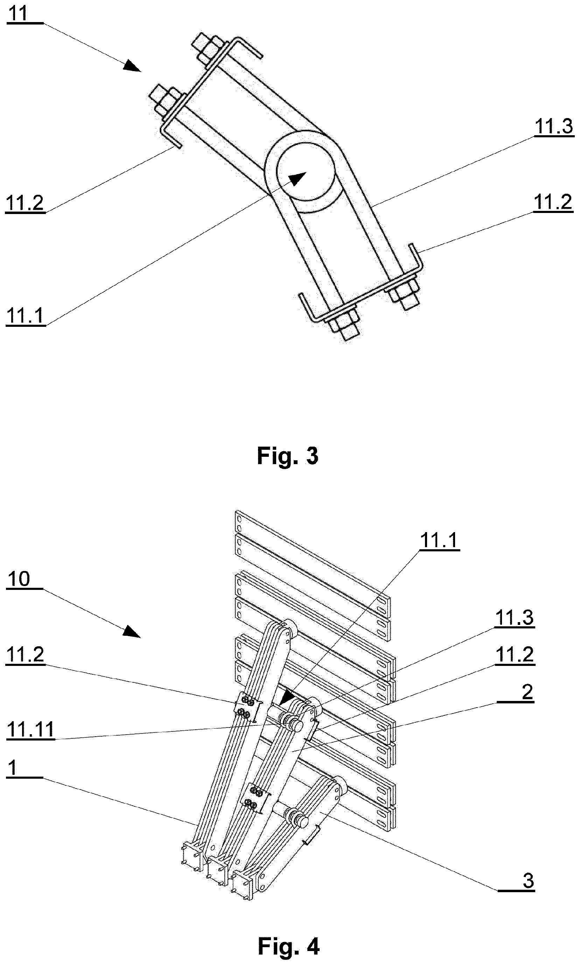

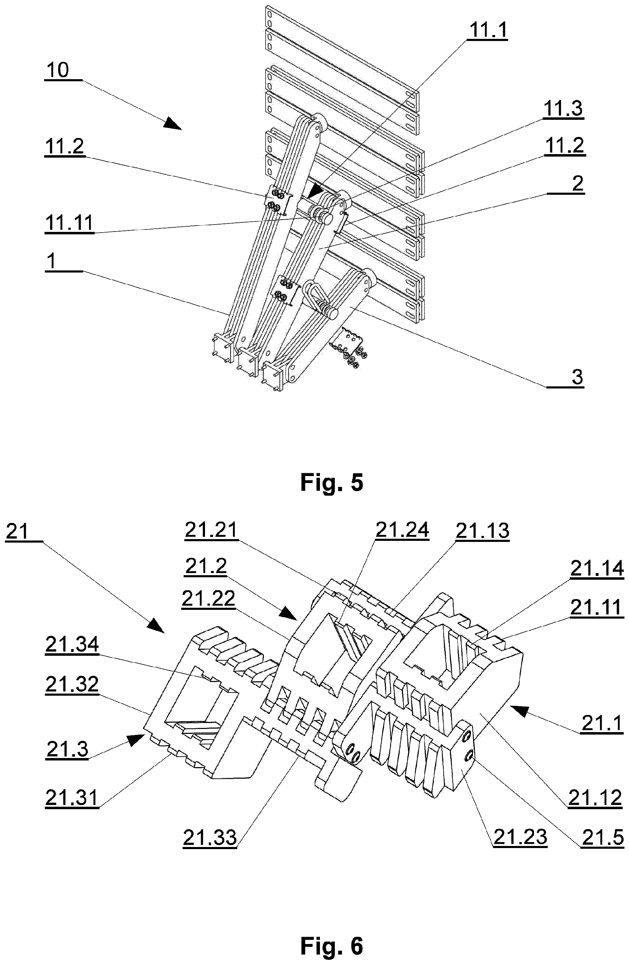

An arrangement 10 for supporting and fixing busbars according to the first embodiment of the invention (Fig. 4, Fig. 5), comprises insulating units 11 for connecting adjacent busbars. Said insulating units 11 are arranged such that a change of their positions along busbars 1, 2, 3 causes a change of an angle between said busbars 1, 2, 3. Each of insulating units 11 comprises an insulating element 11.1 to be arranged slidably between adjacent busbars 1, 2, 3.

The application of said insulating units 11, wherein each of insulating units 11 comprises the insulating element 11.1 to be arranged slidably between the adjacent busbars 1, 2, 3 provides an arrangement 10 for supporting and fixing busbars to be used with the busbars 1, 2, 3 oriented angularly, in particular the busbars 1, 2, 3 oriented angularly with respect to each other, which at the same time maintains an appropriate level of electrical insulation of said busbars 1, 2, 3. As the result it ensures an increase in the short-circuit withstand of a busbar system comprising said busbars 1, 2, 3 and improvement in heat dissipation from busbars 1, 2,3 compared to the solutions known from the prior art. Thus it leads to improvement in thermal performance of switchgears where said busbars 1, 2, 3 are guided.

Further, the application of the insulating units 11 comprising insulating elements 11.1 to be arranged slidably between the adjacent busbars 1, 2, 3 ensures that the position of the insulating unit 11 on the busbars 1, 2, 3 can be freely adjusted.

Each of said insulating elements 11.1 is in a form of a round shaft. Further, the insulating element 11.1 is made of glass reinforced polyester. The insulating element 11.1 is arranged to be in contact with an upper located part of the surface of one busbar 1, 2, 3 and a lower located part of the surface of the other busbar 1, 2, 3. Each of said insulating elements 11.1 comprises grooves 11.11 with a width corresponding to a width of layers forming each busbar 1, 2, 3.

The application of the insulating elements 11.1 comprising grooves 11.11 with the width corresponding to the width of layers forming each busbar 1, 2, 3 facilitates positioning of each layer forming a busbar 1, 2, 3. Further said application ensures that the arrangement 10 is to be used with different number of layers forming a busbar 1, 2, 3, wherein each of such a layer can have different cross-section. Thus the arrangement 10 constitutes a universal solution.

Each of insulating units 11 comprises further holding plates 11.2 and threated U-bolts 11.3, for example U-bolts M8, for connecting the holding plates 11.2 with the insulating elements 11.1, and wherein the holding plates 11.2 and the insulating elements 11.1 are to be located on the opposite surfaces of adjacent busbars 1, 2, 3. The holding plates 11.2 are made of galvanized steel. The threated U-bolts 11.3 are made of steel or steel with a Zinc plating. The holding plates 11.2 and threated U-bolts 11.3 are connected to each other by means of screws. For a three-pole system, two insulating units 11 are required, and for a four-pole system, three insulating units 11 are required.

### The second embodiment of the invention

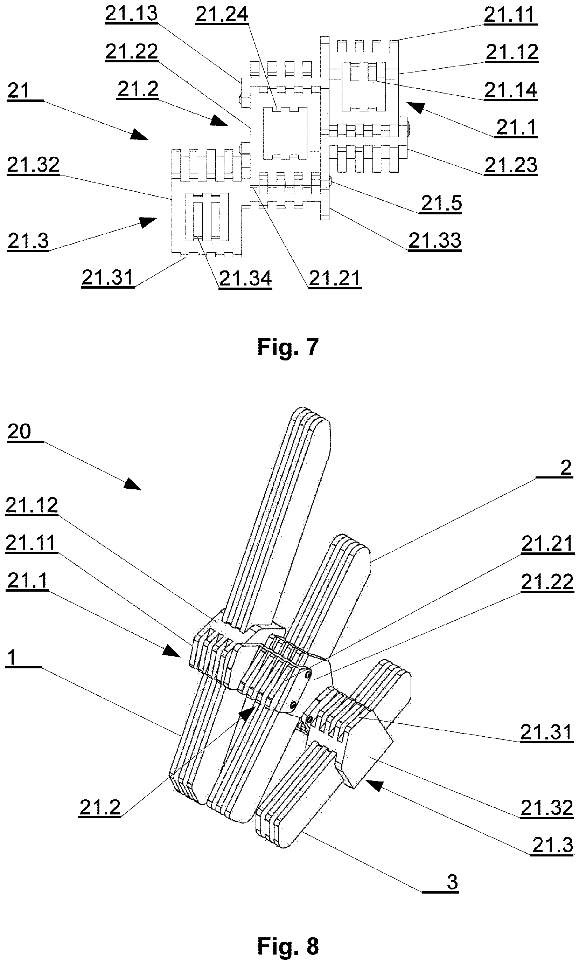

An arrangement 20 for supporting and fixing busbars according to the second embodiment of the invention (Fig. 6, Fig. 7, Fig. 8), comprises insulating unit 21 for connecting adjacent busbars. The insulating unit 21 comprises clamps 21.1, 21.2, 21.3 adapted to be slidably arranged on adjacent busbars 1, 2, 3, wherein said clamps 21.1, 21.2, 21.3 comprises fitted connections 21.11, 21.21, 21.31 that allow a cooperation between said clamps 21.1, 21.2, 21.3 such that moving one clamp 21.1, 21.2, 21.3 relative to the other clamp 21.1, 21.2, 21.3 changes an angle between the adjacent busbars 1, 2, 3.

The application of the insulating unit 21 comprising the clamps 21.1, 21.2, 21.3 adapted to be slidably arranged on adjacent busbars 1, 2, 3, where said clamps 21.1, 21.2, 21.3 comprises fitted connections 21.11, 21.21, 21.31 that allow a cooperation between said clamps 21.1, 21.2, 21.3 such that moving one clamp 21.1, 21.2, 21.3 relative to the other clamp 21.1, 21.2, 21.3 changes an angle between adjacent busbars 1, 2, 3 provides an arrangement 20 for supporting and fixing busbars to be used with busbars 1, 2, 3 oriented angularly, in particular busbars 1, 2, 3 oriented angularly with respect to each other, which at the same time maintains an appropriate level of electrical insulation of said busbars 1, 2, 3. As a result it ensures an increase in the short-circuit withstand of a busbar system comprising said busbars 1, 2, 3 and improvement in heat dissipation from busbars 1, 2, 3 compared to the solutions known from the prior art. Thus it leads to improvement in thermal performance of switchgears where said busbars 1, 2, 3 are guided.

Further, the application of the insulating unit 21 as disclosed ensures that the position of the insulating unit 21 on the busbars 1, 2, 3 can be freely adjusted.

As it was mentioned above moving one clamp 21.1, 21.2, 21.3 relative to the other clamp 21.1, 21.2, 21.3 changes the angle between adjacent busbars 1, 2, 3 and this also means changing the angle between the clamps 21.1, 21.2, 21.3. The angular change between the clamps 21.1, 21.2, 21.3 allows their self-blocking.

Each of the clamps 21.1, 21.2, 21.3 comprises a body 21.12, 21.22, 21.32 and a support arm 21.13, 21.23, 21.33, wherein the body 21.12, 21.22, 21.32 and the support arm 21.13, 21.23, 21.33 have the fitted connections 21.11, 21.21, 21.31 and wherein the fitted connections 21.11, 21.21, 21.31 allow a cooperation between the body 21.12, 21.22, 21.32 of one of the clamps 21.1, 21.2, 21.3 and the support arm 21.13, 21.23, 21.33 of the other of the clamps 21.1, 21.2, 21.3.

The application of the fitted connections 21.11, 21.21, 21.31 on the bodies 21.12, 21.22, 21.32 and the support arms 21.13, 21.23, 21.33 of the clamps 21.1, 21.2, 21.3 allows blocking of movement between the clamps 21.1, 21.2, 21.3 in a direction perpendicular to the longitudinal axes of the busbars 1, 2, 3.

The clamps 21.1, 21.2, 21.3 are adapted to be slidably arranged on adjacent busbars 1, 2, 3 by means of projections 21.14, 21.24, 21.34 located on the inner surfaces of the bodies 21.12, 21.22, 21.32 clamps 21.1, 21.2 21.3.

The fitted connections 21.11, 21.21, 21.31 have a form of ribs. The application of the fitted connections 21.11, 21.21, 21.31 having a form of ribs facilitates heat dissipation from the busbars 1, 2, 3.

The clamps 21.1, 21.2, 21.3 are made of glass reinforced polyester.

The clamps 21.1, 21.2, 21.3 have the same shape, which simplifies the process of manufacturing them. This, in turn, reduces the manufacturing time of the arrangement 20 and the financial expenses associated with such manufacturing.

The final position of the clamps 21.1, 21.2, 21.3 can be determined using fasteners 21.5 such as screws tightened on their sides.

For a three-pole system, three clamps are required, and for a four-pole system, four clamps are required.

### The third embodiment of the invention

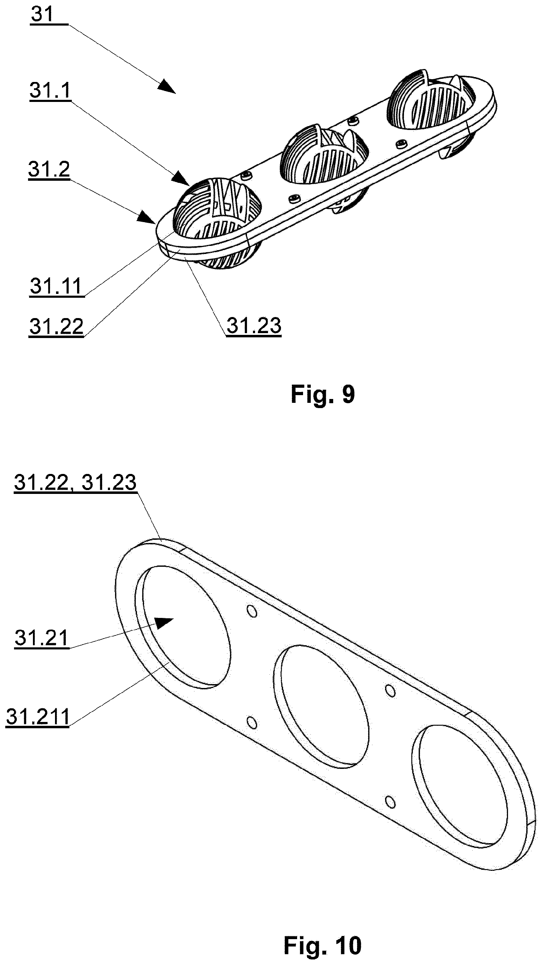

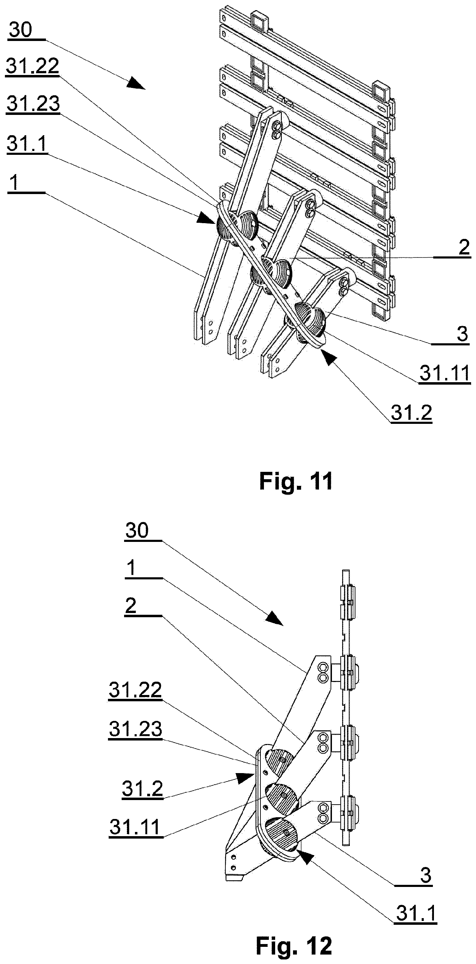

An arrangement 30 for supporting and fixing busbars according to the third embodiment of the invention (Fig. 9, Fig. 11, Fig. 12), comprises insulating unit 31 for connecting adjacent busbars. The insulating unit 31 comprises spherical elements 31.1 and a holder 31.2 for holding the spherical elements 31.1. The spherical elements 31.1 are adapted to be slidably arranged on adjacent busbars 1, 2, 3. The holder 31.2 comprises openings 31.21 with internal spherical surfaces 31.211 for said spherical elements 31.1, the internal spherical surfaces 31.211 being adapted for allowing to secure said spherical elements 31.1 within the holder 31.2 and allowing said spherical elements 31.1 to rotate in each axis.

The application of the insulating unit 31 comprising the spherical elements 31.1, where the spherical elements 31.1 are adapted to be slidably arranged on adjacent busbars 1,2 3; the holder 31.2 for holding the spherical elements 31.1; where the holder 31.2 comprises openings 31.21 with internal spherical surfaces 31.211 for said spherical elements 31.1, the internal spherical surfaces 31.211 being adapted for allowing to secure said spherical elements 31.1 within the holder 31.2 and allowing said spherical elements 31.1 to rotate in each axis provides an arrangement 30 for supporting and fixing busbars to be used with busbars 1, 2, 3 oriented angularly, in particular busbars 1, 2, 3 oriented angularly with respect to each other, which at the same time maintains an appropriate level of electrical insulation of said busbars 1, 2, 3. As a result it ensures an increase in the short-circuit withstand of a busbar system comprising said 1, 2, 3 and improvement in heat dissipation from busbars compared to the solutions known from the prior art. Thus it leads to improvement in thermal performance of switchgears where said busbars 1, 2, 3 are guided.

Further, the application of the insulating unit 31 as disclosed ensures that the position of the insulating unit 31 on the busbars 1, 2, 3 can be freely adjusted.

The spherical elements 31.1 comprise ribs 31.11. Said ribs facilitates heat dissipation from the busbars 1, 2, 3. The holder 31.2 has a form of two plates 31.22, 31.23 to be connected with each other.

The spherical elements 31.1 are made of thermally conductive material, for example aluminum, zinc alloy or steel. The holder 31.2 is made of material high insulating and mechanical properties, for example glass reinforced polyester sheet.

The spherical elements 31.1 are connected to the busbars 1, 2, 3 by means of fasteners 31.3, for example screws, which results in blocking the arrangement 30.

### Designations:

1, 2, 3 - busbar
10, 20, 30 - arrangement for supporting and fixing busbars
11, 21, 31 - insulating unit
11.1 - insulating element
11.11 - grooves
11.2 - holding plate
11.3 -threated U-bolt
21.1, 21.2, 21.3- clamp
21.11, 21.21, 21.31 - fitted connections
21.12, 21.22, 21.32 - clamp's body
21.13, 21.23, 21.33 - support arm
21.14, 21.24, 21.34 - projections
21.5 - fasteners
31.1 - spherical elements
31.11 - ribs
31.2 - holder
31.21 - openings
31.211 - internal spherical surfaces
31.22, 31.23 - plates
31.3 - fasteners

## Claims

1. An arrangement (10, 20, 30) for supporting and fixing busbars, comprising at least one insulating unit (11, 21, 31) for connecting adjacent busbars (1, 2, 3), **characterized in that** said insulating unit (11, 21, 31) is arranged such that a change of its position along at least one busbar (1, 2, 3) causes a change of an angle between busbars (1, 2, 3).

2. The arrangement (10) according to claim 1, wherein the at least one insulating unit (11) comprises at least one insulating element (11.1) to be arranged slidably between adjacent busbars (1, 2, 3).

3. The arrangement (10) according to claim 2, wherein the at least one insulating element (11.1) is arranged to be in contact with an upper located part of the surface of one busbar (1, 2, 3) and a lower located part of the surface of the other busbar (1, 2, 3).

4. The arrangement (10) according to claim 2 or 3, wherein the at least one insulating element (11.1) comprises grooves (11.11) with a width corresponding to a width of layers forming each busbar (1, 2, 3).

5. The arrangement (10) according to any of claims from 2 to 4, wherein the at least one insulating element (11.1) is in a form of a round shaft.

6. The arrangement (10) according to any of claims from 2 to 5, wherein the at least one insulating unit (11) comprises further at least two holding plates (11.2) and at least two threated U-bolts (11.3) for connecting the at least two holding plates (11.2) with the at least one insulating element (11.1), and wherein the at least two holding plates (11.2) and the at least one insulating element (11.1) are to be located on the opposite surfaces of adjacent busbars (1, 2, 3).

7. The arrangement (20) according to claim 1, wherein the at least one insulating unit (21) comprises at least two clamps (21.1, 21.2, 21.3) adapted to be slidably arranged on adjacent busbars (1, 2, 3), wherein said at least two clamps (21.1, 21.2, 21.3) comprises fitted connections (21.11, 21.21, 21.31) that allow a cooperation between said clamps (21.1, 21.2, 21.3) such that moving one clamp (21.1, 21.2, 21.3) relative to the other clamp (21.1, 21.2, 21.3) changes an angle between adjacent busbars (1, 2, 3).

8. The arrangement (20) according to claim 7, wherein each of the at least two clamps (21.1, 21.2, 21.3) comprises a body (21.12, 21.22, 21.32) and a support arm (21.13, 21.23, 21.33), wherein the body (21.12, 21.22, 21.32) and the support arm (21.13, 21.23, 21.33) have the fitted connections (21.11, 21.21, 21.31) and wherein the fitted connections (21.11, 21.21, 21.31) allow a cooperation between the body (21.12, 21.22, 21.32) of one of the at least two clamps (21.1, 21.2, 21.3) and the support arm (21.13, 21.23, 21.33) of the other of the at least two clamps (21.1, 21.2, 21.3).

9. The arrangement (20) according to claim 7 or 8, wherein the fitted connections (21.11, 21.21, 21.31) have a form of ribs.

10. The arrangement (30) according to claim 1, wherein the at least one insulating unit (31) comprises:
- at least two spherical elements (31.1), wherein the least two spherical elements (31.1) are adapted to be slidably arranged on adjacent busbars (1, 2, 3);
- a holder (31.2) for holding the at least two spherical elements (31.1);
wherein the holder (31.2) comprises openings (31.21) with internal spherical surfaces (31.211) for said spherical elements (31.1), the internal spherical surfaces (31.211) being adapted for allowing to secure said spherical elements (31.1) within the holder (31.2) and allowing said spherical elements (31.1) to rotate in each axis.

11. The arrangement (30) according to claim 10, wherein the at least two spherical elements (31.1) comprise ribs (31.11).

12. The arrangement (30) according to claim 10 or 11, wherein the at least two spherical elements (31.1) are made of thermally conductive material.

13. The arrangement (30) according to any of claims from 10 to 12, wherein the holder (31.2) has a form of two plates (31.22, 31.23) to be connected with each other.
